# EUROPEAN PATENT APPLICATION

(11) **EP 2 154 897 A2**
(43) Date of publication of application: **17.02.2010**
(21) Application number: 09007227.3
(22) Date of filing: 29.05.2009
(51) Int. Cl.: H04N 7/26, H04N 7/50

(54) **Video coding apparatus and method**

(30) Priority: 15.08.2008 JP 2008209315
(71) Applicant: Fujitsu Limited, Kawasaki-shi, Kanagawa 211-8588 (JP)
(72) Inventor: Kazui, Kimihiko, Kawasaki-shi, Kanagawa 211-8588 (JP)
(74) Representative: HOFFMANN EITLE

(57) **Abstract**

A video coding apparatus (100) includes an intra prediction mode determining unit (110) that fixedly selects a mode in which same intra prediction values are used for all blocks to be processed in a macroblock; and an intra prediction coding unit (120) that performs intra prediction coding separately for an AC component and a DC component of a block to be processed.

## Description

### FIELD

The embodiments discussed herein are directed to a video coding apparatus and a video coding method for performing intra prediction coding.

### BACKGROUND

Video data generally contain a large amount of information, and it would be very costly if such data are stored in a medium or transmitted over a network without modification. Therefore, conventionally, many technical developments and standardization efforts have been widely made to compress-code video data using lossless or lossy compression techniques. Typical examples include the MPEG-1, the MPEG-2, the MPEG-4, and the MPEG-4 AVC/H.264, all of which are standardized by the Moving Picture Experts Group (MPEG).

In these standards, interframe motion prediction is adopted in coding. In the coding with the interframe motion prediction, highly correlative portions of frames are searched and positional difference (motion vectors) and pixel value difference (prediction errors) of the portions are coded.

In the MPEG-4 AVC/H.264, intra prediction coding is adopted in addition to the coding with the interframe motion prediction. In intra prediction coding, differences between original pixels and prediction values (N x N prediction pixels) generated from previously coded pixels (local decoded pixels) in the same picture, are calculated and the calculated differences are coded.

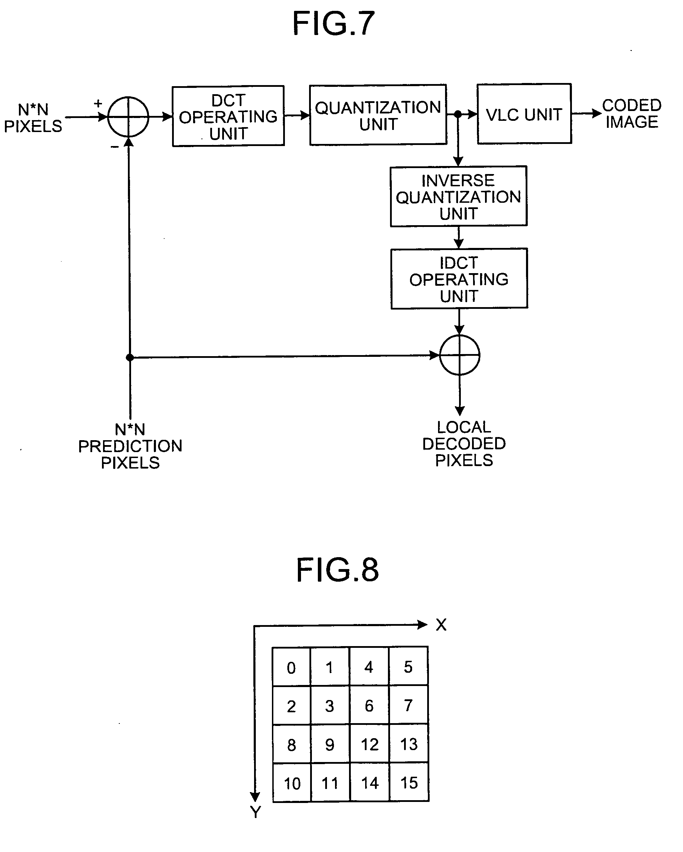

More specifically, as depicted in FIG. 7, calculation of differences is performed between N x N pixels to be coded (N is 4 or 8 in the MPEG-4 AVC/H.264) and N x N prediction pixels to obtain N x N prediction-error pixels. Using the N x N prediction-error pixels thus obtained, coded image and N x N local coded pixels are obtained.

The process of intra prediction coding will now be explained with reference to FIGS. 8 to 10. In FIG. 8, a processing order of blocks included in a macroblock (16 x 16 pixels of luma components) that is a unit of processing is indicated. As depicted in FIG. 8, the processing is performed in order from 0 to 15. In the example depicted in FIG. 8, each block has a size of 4 x 4.

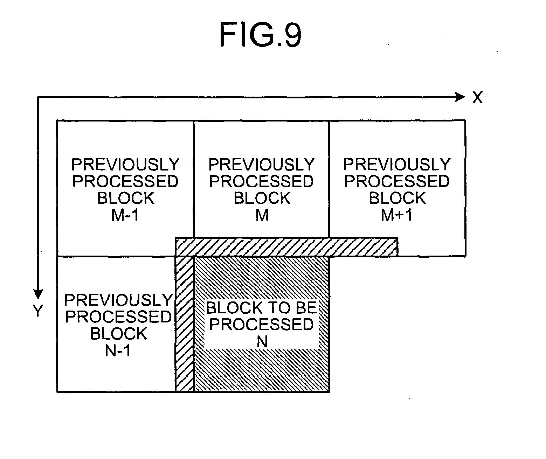

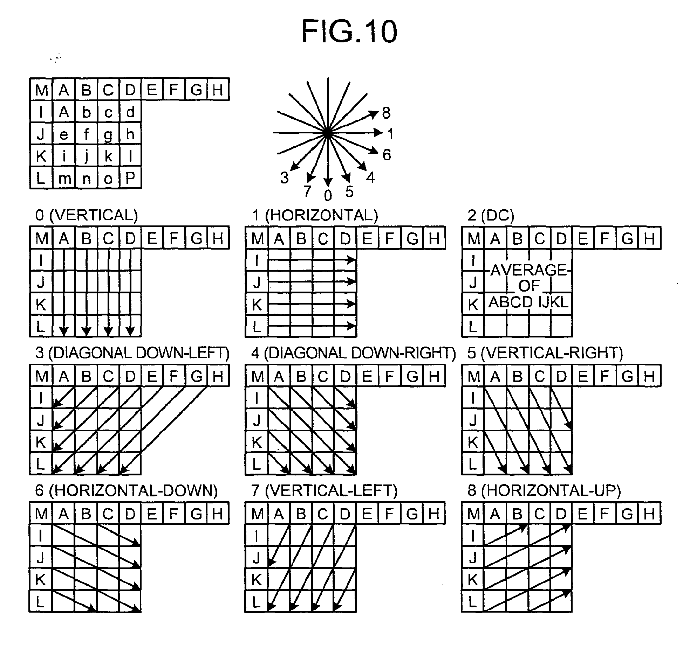

A method for generating the N x N prediction pixels will now be described with reference to FIGS. 9 and 10. FIG. 9 is a schematic of pixels used for generating the N x N prediction pixels. The N x N prediction pixels are generated using hatched pixels depicted in FIG. 9. A previously processed block herein is either another block in the same macroblock or a block in a vertically or horizontally neighboring macroblock.

For example, if a block to be processed is the third block in a macroblock (see FIG. 8), a previously processed block N-1 will be the second block processed in the same macroblock, and a previously processed block M will be the first block processed in the same macroblock. If the block to be processed is the zero-th block in a macroblock, the previously processed block N-1 will be the fifth block processed in the macroblock neighboring on the left, and the previously processed block M will be the tenth block processed in the macroblock neighboring at the top.

FIG. 10 is a conceptual schematic of how the N x N prediction pixels are generated. For the MPEG-4 AVC/H.264, nine ways (prediction modes) can be used to generate a 4 x 4 luma component block. Depending on predetermined conditions, one of the nine prediction modes is selected. In FIG. 10, pixels with uppercase letters are pixels used for generating the N x N prediction pixels, and those with lowercase letters are pixels to be predicted. Each arrow indicates that a pixel value at its origination is used as a prediction value of its destination.

For example, if the mode 0 (vertical) is used for pixels [a, p] in a block to be processed, a prediction value for each of pixels a, e, i, and m will be a pixel value of a pixel A; a prediction value for each of pixels b, f, j, and n will be a pixel value of a pixel B; a prediction value for each of pixels c, g, k, and O will be a pixel value of a pixel C; and a prediction value for each of pixels d, h, l, and p will be a pixel value of a pixel D.

There has been also developed a process for speeding up intra prediction coding by performing pipeline processing for a line of N macroblocks using N macroblock processing circuits, for example (see Japanese Laid-open Patent Publication No. 2007-312340).

In addition, there has been developed a process for determining an intra prediction mode per block by changing the processing order of the blocks within a macroblock, and restricting intra prediction modes for some of the blocks (see Japanese Laid-open Patent Publication No. 2007-124409).

In the conventional technique described above, a prediction value, used for intra prediction coding, takes a local decoded value of a previously coded block within the same picture. Therefore, coding of a next block cannot be started unless coding of a previous block is completed. As a result, the processing per block cannot be parallelized, inhibiting speedup of the coding process.

In the technique where the line of N macroblocks is pipeline-processed, only the processing per macroblock are parallelized, and coding of individual macroblocks cannot be sped up.

In the technique where the intra prediction mode is determined per block, the block processing itself is not parallelized, and macroblock coding cannot be drastically sped up.

### SUMMARY

The present invention is made to solve the above described problems, and an object of the invention is to provide a video coding apparatus and method capable of performing intra prediction coding at a higher speed.

According to an aspect of the invention, a video coding apparatus includes an intra prediction mode determining unit that fixedly selects a mode in which same intra prediction values are used for all blocks to be processed in a macroblock; and an intra prediction coding unit that performs intra prediction coding separately for an AC component and a DC component of a block to be processed.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWING(S)

FIG. 1 is a block diagram of a structure of an intra prediction coding apparatus according to a first embodiment of the present invention;
FIG. 2 is a block diagram of an alternate current (AC) processing unit depicted in FIG. 1;
FIG. 3 is a block diagram of a direct current (DC) processing unit depicted in FIG. 1;
FIG. 4 is a schematic of a process to fixedly select a DC prediction mode;
FIG. 5 is a schematic of timing for performing an AC process and a DC process;
FIG. 6 is an illustrative flowchart of an intra prediction coding process performed by the intra prediction coding apparatus according to the first embodiment;
FIG. 7 is a schematic of a conventional intra prediction coding process;
FIG. 8 is a schematic of a processing order of blocks within a macroblock;
FIG. 9 is a schematic of positions of neighboring blocks used for intra prediction; and
FIG. 10 is a schematic of an intra prediction mode according to the MPEG-4 AVC/H.264.

### DESCRIPTION OF EMBODIMENT(S)

Preferred embodiments of a video coding apparatus and a video coding method according to the present invention will be explained in detail with reference to accompanying drawings.

### [a] First Embodiment

In the explanation below, a structure of an intra prediction coding apparatus according to a first embodiment of the present invention will be explained at first, and the process performed thereby will then follow. Finally, effects of the first embodiment will be described.

### [Structure of Intra Prediction Coding Apparatus]

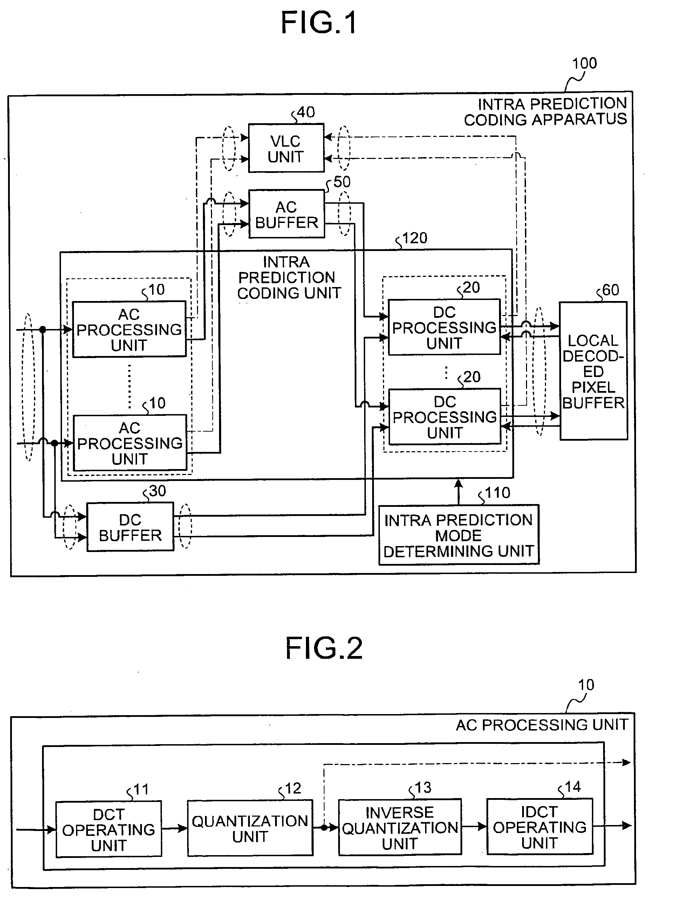

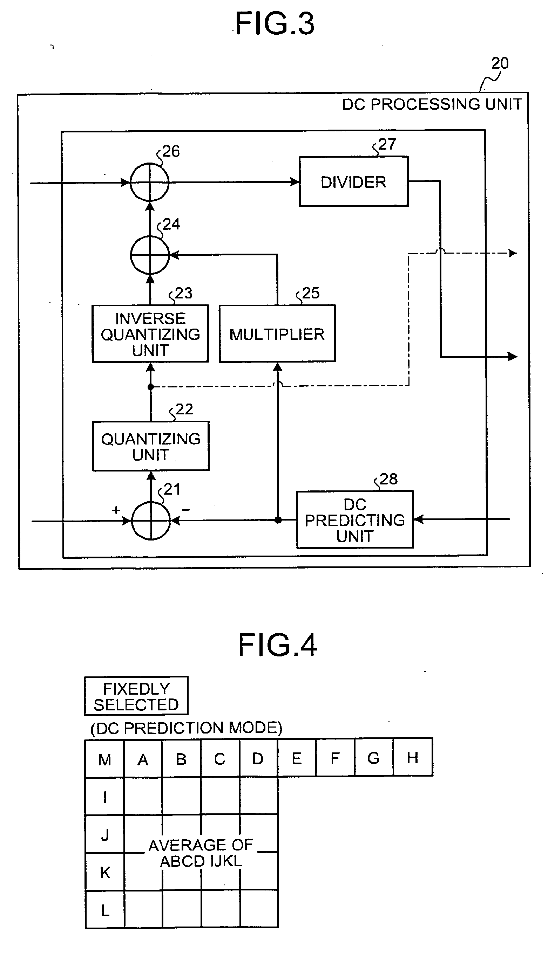

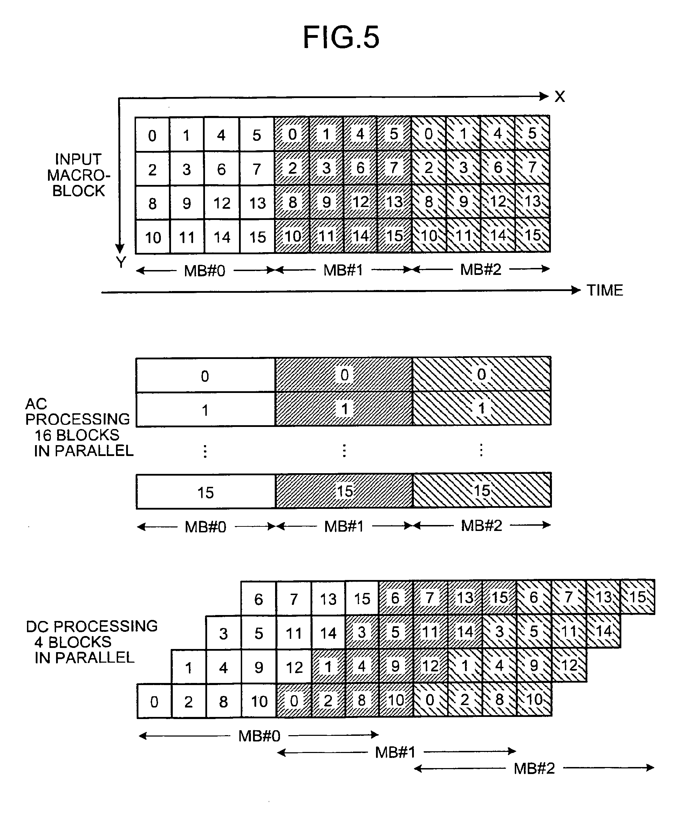

First, a structure of an intra prediction coding apparatus 100 will be explained with reference to FIGS. 1 to 5. FIG. 1 is a block diagram of a structure of the intra prediction coding apparatus 100 according to the first embodiment of the present invention. FIG. 2 is a block diagram of a structure of an alternate current (AC) processing unit. FIG. 3 is a block diagram of a structure of a direct current (DC) processing unit. FIG. 4 is a schematic of a process for fixedly selecting a DC prediction mode. FIG. 5 is a schematic of timing for performing an AC process and a DC process.

As depicted in FIG. 1, the intra prediction coding apparatus 100 includes an intra prediction mode determining unit 110, an intra prediction coding unit 120, a DC buffer 30, a variable length coding (VLC) unit 40, an AC buffer 50, and a local decoded pixel buffer 60. Each of these units will be explained below. Note that the intra prediction coding apparatus 100 also includes sixteen AC processing units 10 and four DC processing units 20; however, parallel processing is still possible in fewer numbers of these units.

The intra prediction mode determining unit 110 fixedly selects a DC prediction mode in which same intra prediction values are used for all blocks in a macroblock. More specifically, the intra prediction mode determining unit 110 restricts the nine intra prediction modes specified in the MPEG-4 AVC/H.264 (see FIG. 10) so that only the DC prediction mode (Mode 2 in FIG. 10) is selectable.

The DC prediction mode will now be explained with reference to FIG. 4. As depicted in FIG. 4, in the DC prediction mode, the prediction value for all blocks to be processed is an average of local decoded values of pixels positioning at pixels A, B, C, D, I, J, K, and L.

The intra prediction coding unit 120 includes a plurality of AC processing units 10 and a plurality of DC processing units 20, and performs intra prediction coding separately for AC components and DC components of a block to be processed.

A relationship between the AC components and the DC components will now be explained. It is assumed in the explanation below, c(i, j) and p(i, j) denote a 4 x 4 array of pixel values in a block to be coded and a 4 x 4 array of prediction values, respectively, and C(i, j) and P(i, j) denote results of discrete cosine transform (DCT) performed on c(i, j) and p(i, j), respectively. If the DCT operator is T(), because T() is linear, T(c-p) = T(c) - T(p) = (C-P) is established.

In the DC mode, P has characteristics "P(i, j) = x" for the DC component and "P(i, j) = 0" for other than the DC component, where i = 0 and j = 0. Herein, x is an average of local decoded values of the pixels at A, B, C, D, I, J, K, and L in FIG. 4.

In other words, the AC components C(i, j) of the 4 x 4 array of the pixel values in a block to be coded (here, i! = 0&j! = 0) are not affected by the difference operation between the pixel values to be coded and the prediction values. Based on this fact, a block processing is performed separately for the AC components and the DC components.

Processing performed by the AC processing units 10 and the DC processing units 20 included in the intra prediction coding unit 120 will now be explained. The intra prediction coding unit 120 has 16 AC processing units 10 and four DC processing units 20; however, parallel processing is still possible in fewer numbers of these units.

Each of the AC processing units 10 accepts any of the 16 blocks (each block is made of 4 x 4 pixels) included in the macroblock simultaneously, and performs an AC component processing. More specifically, the AC processing unit 10 performs the DCT operation to c(i, j) that is the 4 x 4 array of the pixel values of the block to be coded, to obtain C(i, j). At this time, the DC component C(0, 0) is set to 0.

The AC processing unit 10 subsequently performs quantization, inverse quantization, and inverse discrete cosine transform (IDCT) operation to C(i, j) (15 AC coefficients but not the DC component). The AC processing unit 10 then outputs quantized DCT coefficients (only the AC components) and results of the IDCT operations (only the AC components). An internal structure of the AC processing unit 10 will be described later with reference to FIG. 2.

Each of the DC processing units 20 accepts the DC component in the block from the DC buffer 30, the results of the IDCT operation (only the AC components) in the block from the AC buffer 50, and the local decoded pixel, used for generating intra DC prediction values for the block, from the local decoded pixel buffer 60, to perform a DC component processing.

More specifically, the DC processing unit 20 adds up the 16 pixel values of c(i, j) using the adding module that adds up the pixel values to obtain the DC component C(0, 0). This value is the same as C(0, 0) obtained when the DCT operation is performed on c(i, j).

In parallel with this process, because the DC processing unit 20 is in the DC prediction mode fixedly selected, the DC processing unit 20 obtains 16x by multiplying 16 by "x" that is the average of the local decoded values of the pixels at A, B, C, D, I, J, K, and L. This is because the DC value is scaled by 16 in the DCT operation according to the MPEG-4 AVC/H.264.

The DC processing unit 20 subsequently subtracts 16x from C(0, 0). Furthermore, the intra prediction coding apparatus 100 performs quantization and inverse quantization, and outputs a quantized result of the error of the DC component intra predictions to the VLC unit 40.

In parallel with this process, the DC processing unit 20 also multiplies 16x by 4 to obtain 64x. This is because the DCT coefficient values are scaled by four in the quantization and the inverse quantization according to the MPEG-4 AVC/H.264.

Then, the DC processing unit 20 adds 64x to the result of the inverse quantization. The DC processing unit 20 then adds the result of the addition (scalar value) to each element of the results of the IDCT operation performed for the AC components (4 x 4 vector values), and divides each of the results by a scaling value 64 to obtain local decoded pixel c'(i, j). Then, the DC processing unit 20 outputs the results to the local decoded pixel buffer 60.

Each of the DC processing units 20 then outputs the results of the quantization performed for the intra prediction errors of the DC components to the VLC unit 40, and outputs the local decoded results for the block to the local decoded pixel buffer 60. An internal structure of the DC processing unit 20 will be explained later with reference to FIG. 3.

Because the intra prediction mode is fixed to the DC prediction mode, the AC component processing performed by the respective AC processing units 10 are not affected by the intra prediction values. In other words, the processing can be performed in parallel, regardless of other block processing to be referred to during the intra prediction. By providing N modules for the AC component processing, the AC components can be processed at a rate N times faster.

On the other hand, the DC component processing need to wait for the completion of other block processing to be referred to during the intra prediction. Therefore, all of the blocks cannot be processed simultaneously. However, the intra DC prediction only depends on the blocks neighboring at the top and on the left. Therefore, based on this fact and the block processing order, the DC component processing can be parallelized up to four to achieve processing at a rate four times faster.

Blocks to be referred to when the fifth, the sixth, the ninth, and the tenth blocks, whose DC component processing are parallelized, are processed will be described with reference to the example depicted in FIG. 8. For the fifth block, the fourth block in the same macroblock and the fifteenth block in a macroblock neighboring at the top are referred to; for the sixth block, the third and fourth blocks in the same macroblock are referred to; for the ninth block, the eighth and third blocks in the same macroblock are referred to; and for the tenth block, the fifteenth block in a macroblock neighboring on the left and the eighth block in the same macroblock are referred to.

In other words, no dependency exists among the fifth, the sixth, the ninth, and the tenth blocks to be processed. Only if the DC component processing are completed for the third block, the fourth block, the eighth block, the fifteenth block in the macroblock neighboring at the top, and the fifteenth block in the macroblock neighboring at the left, parallel processing are possible.

Furthermore, the same can be said for the third, fourth, and eighth blocks, and blocks located diagonally from the top right to the bottom left; therefore, four parallel processing are possible for the DC components. The neighboring macroblocks are assumed to be processed before the current macroblock.

Returning to the explanation of FIG. 1, the DC buffer 30 simultaneously accepts 16 blocks included in a macroblock, calculates and saves the sum of the 16 coefficients (DC values) for each of the blocks. Then, the DC buffer 30 outputs the DC values of the blocks to the DC processing unit 20.

The VLC unit 40 receives the AC components of the quantized DCT coefficients of each of the blocks output from the AC processing units 10, and the quantized results of the DC component intra prediction error of each of the blocks output from the DC processing units 20. The VLC unit 40 then performs variable length coding to these inputs, and outputs coded video.

The AC buffer 50 stores therein the IDCT operation results (only the AC components) output from the parallelized AC processing units 10, and outputs the same to the DC processing units 20.

The local decoded pixel buffer 60 stores therein the local decoded results for each of the blocks. The local decoded pixel buffer 60 also outputs local decoded pixel, required for generating the intra DC prediction values, to the DC processing units 20.

The AC processing unit 10 will now be explained in detail with reference to FIG. 2. As depicted in FIG. 2, the AC processing unit 10 includes a DCT operating unit 11, a quantization unit 12, an inverse quantization unit 13, and an IDCT operating unit 14. Each of these elements will now be explained.

The DCT operating unit 11 performs the DCT operation on received 4 x 4 pixels, and outputs DCT operation results with the DC component being set to zero to the quantization unit 12. The quantization unit 12 quantizes the 15 DCT coefficients of the AC components other than the DC component.

The inverse quantization unit 13 inversely quantizes the 15 quantized DCT coefficients of the AC components other than the DC component. The IDCT operating unit 14 performs the IDCT operation to the DCT coefficients including the 15 inversely-quantized AC components and the DC component with a coefficient value being set to zero, and outputs the local decoded results not including the DC component.

The DC processing unit 20 will be explained in detail with reference to FIG. 3. As depicted in FIG. 3, the DC processing unit 20 includes a subtractor 21, a quantizing unit 22, an inverse quantizing unit 23, an adder 24, a multiplier 25, an adder 26, a divider 27, and a DC predicting unit 28. Processes performed by these elements will now be explained.

The subtractor 21 subtracts DC prediction values, output from the DC predicting unit 28, from the DC values in the block input to the DC processing unit 20. The quantizing unit 22 performs quantization to the DC prediction error.

The inverse quantizing unit 23 inversely quantizes the quantized DC prediction error. The adder 24 adds the scaled DC prediction value, output from the multiplying unit 25, to the quantized and then inversely-quantized DC prediction errors, and outputs the local decoded results of the DC components.

The multiplier 25 multiples the DC prediction value, output from the DC predicting unit 28, by four. The adder 26 adds the local decoded results of the DC components, output from the adder 24, to each of the local decoded results (4 x 4 coefficients) of the AC components input to the DC processing unit 20.

The divider 27 divides each of the outputs from the adder 26 (4 x 4 coefficients) by 64, and outputs the final local decoded results for the block. The DC processing unit 20 receives the local decoded results of the blocks neighboring at the top and the left including the pixels used for generating the intra DC prediction values. The DC predicting unit 28 calculates the DC prediction values based on these local decoded results.

Timing at which the DC and the AC processes are performed will now be explained with reference to FIG. 5. As depicted in FIG. 5, the numbers in rectangles indicate block numbers (an order of coding processing according to the MPEG-4 AVC/H.264). In the AC processing, 16 blocks in a macroblock are processed simultaneously in parallel as described above.

In the DC processing, 4 blocks having no inter-block dependency are processed simultaneously in parallel. Based on the processing order of blocks in a macroblock (see FIG. 8) and the inter-block dependency (in DC prediction, only the top neighboring block and the left neighboring block have the same, see FIG. 9), processing can be parallelized for neighboring macroblocks, thereby achieving 100% usage efficiency of the parallel pipeline.

### Process Performed by Intra Prediction Coding Apparatus

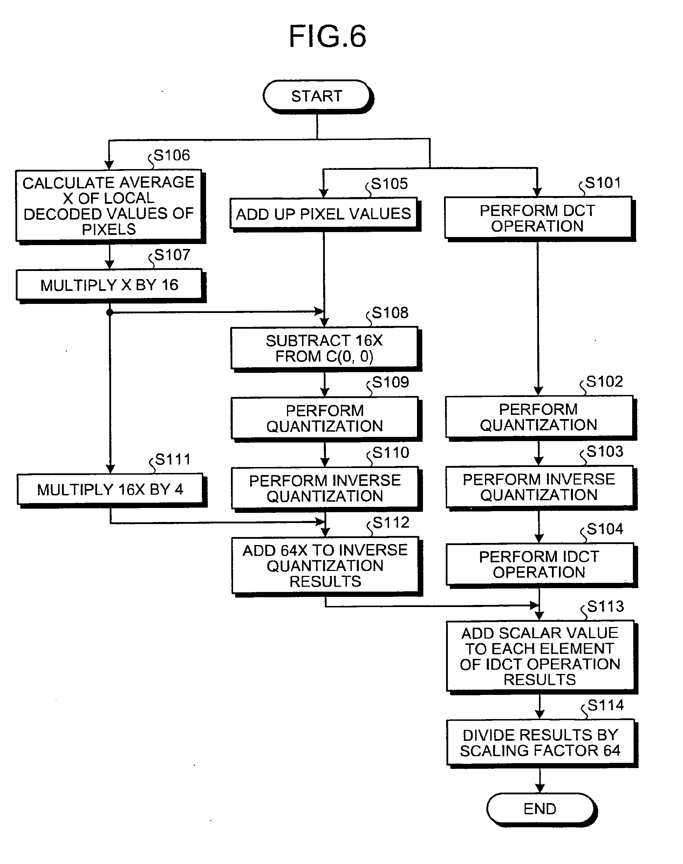

A process performed by the intra prediction coding apparatus 100 according to the first embodiment will now be explained with reference to FIG. 6. FIG. 6 is an illustrative flowchart of the intra prediction coding process performed by the intra prediction coding apparatus according to the first embodiment.

As depicted in FIG. 6, the intra prediction coding apparatus 100 performs the DCT operation to the 4 x 4 array of the pixel values c(i, j) included in the block to be coded as the AC component processing to obtain C(i, j) (Step S101). At this time, the DC component C(0, 0) is set to zero.

Then the intra prediction coding apparatus 100 performs the quantization (Step S102), the inverse quantization (Step S103), and the IDCT operation (Step S104) to C(i, j) (15 AC coefficients but not the DC component).

The intra prediction coding apparatus 100 adds up the 16 pixel values of c(i, j) as the DC component processing to obtain the DC component C(0, 0) (Step S105). This value is the same as C(0, 0) obtained when the DCT operation is performed on c(i, j).

In parallel with this process, the intra prediction coding apparatus 100 obtains x that is the average of the local decoded values of the pixels at A, B, C, D, I, J, K, and L, because the DC prediction mode is fixedly selected (Step S106). The intra prediction coding apparatus 100 then multiplies x by 16 to obtain 16x (Step S107). This is because the DC value is scaled by 16 in the DCT operation according to the MPEG-4 AVC/H.264.

Subsequently, the intra prediction coding apparatus 100 subtracts 16x from C(0, 0) (Step S108). The intra prediction coding apparatus 100 then performs the quantization (Step S109) and the inverse quantization (Step S110).

In parallel with this process, the intra prediction coding apparatus 100 multiplies 16x by 4 to obtain 64x (Step S111). This is because the DCT coefficient values are scaled by 4 in the quantization and the inverse quantization according to the MPEG-4 AVC/H.264.

The intra prediction coding apparatus 100 then adds 64x to the results of the inverse quantization obtained at Step S110 (Step S112). The intra prediction coding apparatus 100 then adds the result of the addition (scalar value), obtained at Step S112, to each element of the results of the IDCT operation performed for the AC components (4 x 4 vector value) (Step S113), and divides the result by a scaling factor 64 (Step S114) to obtain local decoded pixel values c' (i, j).

### Effects of First Embodiment

As described above, the intra prediction coding apparatus 100 fixedly selects the DC prediction mode in which same intra prediction values are used for all blocks to be processed in a macroblock, and performs intra prediction coding separately for the AC component and for the DC component in the block to be processed. Therefore, intra prediction coding can be performed at a higher speed.

Furthermore, according to the first embodiment, the intra prediction coding apparatus 100 includes the plural AC processing units 10, each performing the AC component processing; therefore, the AC processing units 10 can perform the AC component processing in parallel. This accelerates the AC component processing, further enabling intra prediction coding to be performed at a higher speed.

Still furthermore, according to the first embodiment, the intra prediction coding apparatus 100 includes the plural DC processing units 20, each performing the DC component processing; therefore, the DC processing units 20 can perform the DC component processing in parallel. This accelerates the DC component processing, further enabling intra prediction coding to be performed at a higher speed.

Still furthermore, according to the first embodiment, the intra prediction coding apparatus 100 uses an adding module for adding the pixel values to calculate the DC component. Therefore, intra prediction coding can be performed at a higher speed.

### [b] Second Embodiment

The first embodiment of the present invention is explained above. However, the present invention may also be implemented in many other embodiments. Thus, another embodiment will now be explained as a second embodiment of the present invention.

### (1) DC Component

According to the first embodiment described above, the DC component is calculated using the adding module for adding the pixel values. However, the present invention is not limited to this, and the DC component may also be calculated using the DCT operation module that performs the DCT operation.

### (2) System Structure, etc.

Each of the structural components of the units depicted in the schematics is only conceptual in function, and is not necessarily physically configured as depicted in the schematics. That is, the specific patterns of distribution and unification of the units are not limited to those depicted in schematics. All or part of the components can be functionally or physically distributed or unified in arbitrary units, according to various loads and the state of use. For example, the intra prediction coding unit 120 and the intra prediction mode determining unit 110 may be unified. Furthermore, all or arbitrary part of the processing functions performed by the units can be achieved by a Central Processing Unit (CPU) and a computer program analyzed and executed by the CPU, or can be achieved as hardware using wired logics.

Among the processes explained in the embodiments, all or part of the processes explained as being automatically performed may also be manually performed; or all or part of the processes explained as being manually performed may also be automatically performed through a known method. In addition, the processing procedure, control procedure, specific names, information including various data or parameters described in the specification and depicted in the drawings can be arbitrarily modified unless otherwise specified.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A video coding apparatus (100) comprising:
an intra prediction mode determining unit (110) that fixedly selects a mode in which same intra prediction values are used for all blocks to be processed in a macroblock; and
an intra prediction coding unit (120) that performs intra prediction coding separately for an AC component and a DC component of a block to be processed.

2. The video coding apparatus (100) according to claim 1, wherein
the intra prediction coding unit (120) comprises a plurality of AC processing units (10) that performs an AC component processing, and
the AC processing units (10) perform the AC component processing in parallel.

3. The video coding apparatus (100) according to claim 1 or 2, wherein
the intra prediction coding unit (120) comprises a plurality of DC processing units (20) that performs a DC component processing, and
the DC processing units (20) perform the DC component processing in parallel.

4. The video coding apparatus (100) according to claim 3, wherein the DC processing units (20) calculate the DC component by using a DCT operation module that performs a DCT operation.

5. The video coding apparatus according to claim 3, wherein the DC processing units calculate the DC component by using an adding module (24, 26) that adds up pixel values.

6. A video coding method comprising:
fixedly selecting a mode in which same intra prediction values are used for all blocks to be processed in a macroblock; and
performing intra prediction coding separately for an AC component and a DC component of a block to be processed.

7. The video coding method according to claim 6, wherein
in the intra prediction coding, a plurality of AC processing units (10) that performs an AC component processing performs the AC component processing in parallel.

8. The video coding method according to claim 6 or 7, wherein
in the intra prediction coding, a plurality of DC processing units (20) that performs a DC component processing performs the DC component processing in parallel.

9. The video coding method according to claim 8, wherein the DC processing units (20) calculate the DC component by using a DCT operation module that performs a DCT operation.

10. The video coding method according to claim 8, wherein the DC processing units (20) calculate the DC component by using an adding module (24, 26) that adds up pixel values.
